(19) Europäisches Patentamt / European Patent Office / Office européen des brevets

(11) **EP 4 546 243 A1**

(12) **EUROPEAN PATENT APPLICATION**
published in accordance with Art. 153(4) EPC

(43) Date of publication:
**30.04.2025 Bulletin 2025/18**

(21) Application number: **22947907.6**

(22) Date of filing: **21.06.2022**

(51) International Patent Classification (IPC):
**G06Q 40/00** (2023.01)     **G06Q 50/04** (2012.01)

(52) Cooperative Patent Classification (CPC):
**G06Q 10/06315; G06Q 10/06; G06Q 40/00; G06Q 50/04**

(86) International application number:
**PCT/JP2022/024716**

(87) International publication number:
**WO 2023/248344 (28.12.2023 Gazette 2023/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **MIYAMAE, Takeshi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **COMPENSATION DISTRIBUTION PROGRAM, COMPENSATION DISTRIBUTION METHOD, AND COMPENSATION DISTRIBUTION DEVICE**

(57)     Provided is a consideration distribution program causing a computer to execute processing including: for each process included in a supply chain, recording process information that includes a value of the process and identification information for specifying a process performed immediately before the process over a blockchain; and referring to the process information and process information of the process performed immediately before specified from the identification information, and distributing a consideration to the process and the process performed immediately before.

FIG. 10

## Description

Technical Field

The present invention relates to a consideration distribution program, a consideration distribution method, and a consideration distribution apparatus.

Background Art

In the related art, it is known that a distributed ledger technique using a blockchain or a technique of managing a smart contract in which transaction conditions are written in a distributed ledger is applied to traceability management in a supply chain.

Citation List

Patent Literature

PTL 1: Japanese Laid-open Patent Publication No. 2019-074910

Summary of Invention

Technical Problem

With environmental problems such as climate change, pollution due to industrial water, and use of a large amount of water being taken up in recent years, there is a desire to encourage participants in a supply chain to promote mindset change and behavior change for reducing an environmental load. As a mechanism therefor, a mechanism is considered in which a consideration corresponding to an environmental value of a product is returned from a consumer to a supply chain, and this consideration is distributed according to a value of each process in the supply chain by a smart contract managed over a blockchain.

With this mechanism, however, when a scale of the supply chain increases or the like, processing of the smart contract for distributing the consideration becomes complicated and verification becomes difficult, and thus distribution of a consideration for each process may be inappropriately performed.

In one aspect, an object of the present invention is to appropriately distribute a consideration for each process.

Solution to Problem

According to one aspect, a computer is caused to execute processing includes, for each process included in a supply chain, recording process information that includes a value of the process and identification information for specifying a process performed immediately before the process over a blockchain; and referring to the process information and process information of the process performed immediately before specified from the identification information, and distributing a consideration to the process and the process performed immediately before.

Each processing described above may be a functional unit or each procedure that implements each processing described above, and may be a computer-readable storage medium that stores a program that causes a computer to execute each processing.

Advantageous Effects of Invention

A consideration for each process may be appropriately distributed.

Brief Description of Drawings

[FIG. 1] FIG. 1 is a diagram illustrating an example of a system configuration of a consideration distribution system.
[FIG. 2] FIG. 2 is a diagram for describing distribution of a consideration by a consideration distribution smart contract.
[FIG. 3] FIG. 3 is a diagram for describing a hardware configuration of a node.
[FIG. 4] FIG. 4 is a diagram illustrating an example of component information.
[FIG. 5] FIG. 5 is a first sequence diagram for describing an operation of the consideration distribution system.

[FIG. 6] FIG. 6 is a flowchart illustrating processing of a component registration smart contract.

[FIG. 7] FIG. 7 is a second sequence diagram for describing the operation of the consideration distribution system.

[FIG. 8] FIG. 8 is a flowchart illustrating processing of the consideration distribution smart contract.

[FIG. 9] FIG. 9 is a first diagram for describing distribution of a consideration.

[FIG. 10] FIG. 10 is a second diagram for describing distribution of a consideration.

Description of Embodiments

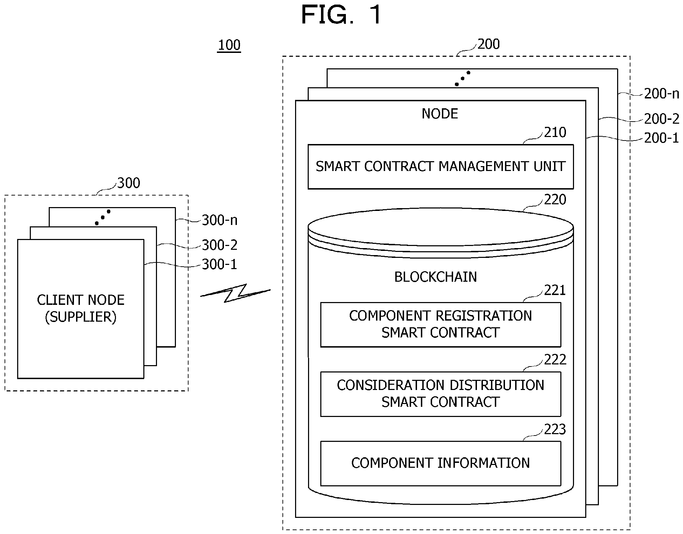

Hereinafter, an embodiment will be described with reference to the drawings. FIG. 1 is a diagram illustrating an example of a system configuration of a consideration distribution system.

When a consideration corresponding to a value of a certain product is returned from a consumer of the product, a consideration distribution system 100 according to the present embodiment manages distribution of the consideration for each process of the product in a supply chain related to this product.

More specifically, when a consideration corresponding to a value of a product is returned from a consumer, the consideration distribution system 100 according to the present embodiment distributes, for each component used in a process of manufacturing the product, a consideration corresponding to a value of the component to a supplier (producer) that manufactures that component.

The supply chain in the present embodiment means a series of processes including procurement of raw materials and components of a product, manufacturing, inventory management, selling, and delivery in a manufacturing industry. In addition, the value for each component of the product manufactured by the supply chain according to the present embodiment is, for example, a value generated in a process of manufacturing each component among manufacturing processes included in the supply chain.

The consideration distribution system 100 according to the present embodiment includes one or more nodes 200-1, 200-2, ..., and 200-n and one or more client nodes 300-1, 300-2, ..., and 300-n. In the following description, when the nodes 200-1, 200-2, ..., and 200-n are not distinguished from each other, they are referred to as nodes 200, and when the client nodes 300-1, 300-2, ..., and 300-n are not distinguished from each other, they are referred to as client nodes 300.

The nodes 200 and the client nodes 300 according to the present embodiment may be general information processing apparatuses. The nodes 200 and the client nodes 300 are coupled to each other via a network and are capable of communicating with each other. In addition, the plurality of nodes 200 are distributed ledger nodes included in a blockchain system, and are coupled to each other by a peer to peer (P2P) method. The client node 300 according to the present embodiment may be used by each of the suppliers included in the supply chain.

The nodes 200 according to the present embodiment each include a smart contract management unit 210 and a blockchain 220.

The smart contract management unit 210 manages a smart contract stored in the blockchain 220.

A component registration smart contract 221, a consideration distribution smart contract 222, and component information 223 are stored in the blockchain 220. In addition, history information indicating a history of distribution of a consideration by the consideration distribution smart contract 222 may be stored in the blockchain 220.

In response to a request from the client node 300, the component registration smart contract 221 according to the present embodiment generates the component information 223 related to a component manufactured by a supplier corresponding to the client node 300 and stores the component information 223 in the blockchain 220.

More specifically, when input of component specification information for specifying a component is accepted, the component registration smart contract 221 calculates a value of the component for which the component information 223 is to be generated, and includes the value in the component information 223. Note that the value of the component may be calculated by the supplier and verified by the component registration smart contract 221. Details of the value of the component will be described later.

When a request for distribution of a consideration is made from a supplier via the client node 300, the consideration distribution smart contract 222 refers to a cumulative consideration that is a consideration obtained by summing up considerations for respective components from this component to a most upstream component in the supply chain. The cumulative consideration is calculated when a consideration for a downstream component of this component is distributed.

Then, based on the value of this component and the cumulative consideration, the consideration distribution smart contract 222 calculates a consideration corresponding to the value of this component and distributes the calculated consideration to the supplier of this component.

In addition, by referring to component information of immediately upstream components of this component, the consideration distribution smart contract 222 calculates a cumulative consideration for each upstream component. Here, the calculated cumulative consideration may be stored in the blockchain 220 as history information indicating a history of distribution of the consideration.

In addition, the component information according to the present embodiment is an example of process information for each process included in the supply chain.

In the following description, in the supply chain, a process (component) upstream of a certain process (component) may be referred to as an upstream process (upstream process), and a process (component) downstream of the certain process (component) may be referred to as a downstream process (downstream component).

The component information 223 is generated by the component registration smart contract 221 and stored in the blockchain 220. Details of the component information 223 will be described later.

As described above, in the present embodiment, the component registration smart contract 221 and the consideration distribution smart contract 222 are executed in response to the request of the supplier. In other words, in the present embodiment, regardless of which supplier included in the supply chain executes a smart contract, the same processing is executed.

Consequently, according to the present embodiment, even in a case where the scale of the supply chain increases, complication of the processing of the smart contract may be suppressed. Furthermore, in the present embodiment, the processing of the smart contract is not complicated and verification is facilitated, so that inappropriate distribution of a consideration for each process of manufacturing a product may be suppressed.

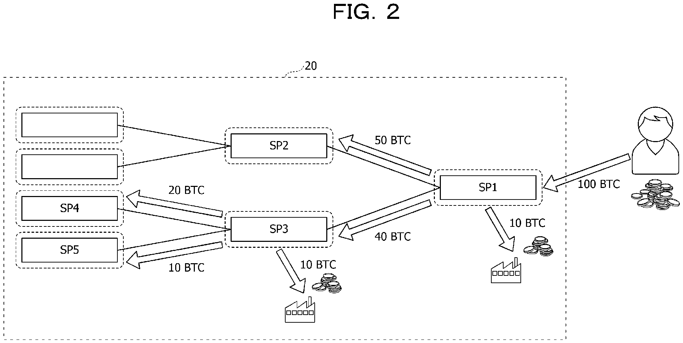

With reference to FIG. 2, a case where each supplier included in the supply chain executes the consideration distribution smart contract 222 will be described below. FIG. 2 is a diagram for describing distribution of a consideration by a consideration distribution smart contract.

FIG. 2 illustrates a case where 100 BTC (Bitcoin) is returned from a consumer as a consideration for a value of a certain product.

Here, when a supplier SP1 included in a supply chain 20 that produces this product requests distribution of a consideration via the client node 300, the node 200 executes the consideration distribution smart contract 222.

Based on a cumulative consideration of a component manufactured by the supplier P1 and a value of the component included in component information of the component manufactured by the supplier SP1, the consideration distribution smart contract 222 calculates a consideration to be distributed to the supplier SP1.

In FIG. 2, since the component manufactured by the supplier P1 is a most downstream component, the cumulative consideration of this component is 100 BTC.

Consequently, the consideration distribution smart contract 222 calculates the consideration to be distributed to the supplier SP1 based on this cumulative consideration and the value of the component manufactured by the supplier SP1. In addition, by referring to component information of components manufactured in each of immediately upstream suppliers SP2 and SP3 of the supplier SP1, the consideration distribution smart contract 222 calculates a cumulative consideration of each upstream component.

In the example in FIG. 2, the consideration to be distributed to the supplier SP1 is 10 BCT, a cumulative consideration to be distributed to the supplier SP2 is 50 BTC, and a cumulative consideration to be distributed to the supplier SP3 is 40 BTC.

Here, next, when the supplier SP3 requests distribution of a consideration via the client node 300, the node 200 executes the consideration distribution smart contract 222.

The consideration distribution smart contract 222 calculates the consideration to be distributed to the supplier SP3, based on the 40 BTC that is the cumulative consideration of the component manufactured by the supplier P3 and a value of a component included in component information of the component manufactured by the supplier SP3. In FIG. 2, the consideration to be distributed to the supplier SP3 is 10 BTC.

In addition, by referring to component information of components manufactured in each of immediately upstream suppliers SP4 and SP5 of the supplier SP3, the consideration distribution smart contract 222 calculates a cumulative consideration of each upstream component. In FIG. 2, a cumulative consideration to be distributed to the supplier SP4 is 20 BTC, and a cumulative consideration to be distributed to the supplier SP5 is 10 BTC.

As described above, in the present embodiment, the result of the processing executed by the consideration distribution smart contract 222 is distributed as a consideration to a supplier that has requested distribution of the consideration. In other words, in the present embodiment, regardless of which supplier requests distribution of a consideration, the consideration is distributed by the same processing.

Consequently, in the present embodiment, even in a case where the scale of the supply chain increases, it is possible to suppress verification related to distribution of a consideration for each process from becoming difficult and to appropriately distribute the consideration for each process.

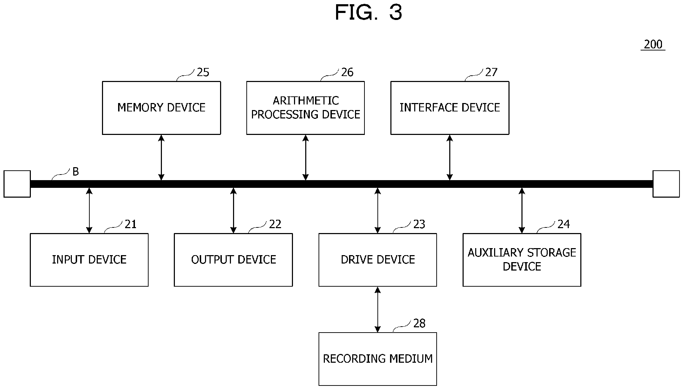

Next, with reference to FIG. 3, a hardware configuration of the node 200 according to the present embodiment will be described. FIG. 3 is a diagram for describing the hardware configuration of the node.

The node 200 according to the present embodiment is an information processing apparatus including an input device 21, an output device 22, a drive device 23, an auxiliary storage device 24, a memory device 25, an arithmetic processing device 26, and an interface device 27, which are coupled to each other by a bus B.

The input device 21 is a device for inputting various types of information, and the output device 22 is a device for outputting various types of information. The interface device 27 includes a LAN card or the like and is used for coupling to a network.

The component registration smart contract 221 and the consideration distribution smart contract 222 are at least a part of various programs included in the node 200. Note that the component registration smart contract 221 and the consideration distribution smart contract 222 according to the present embodiment may be a part of a consideration distribution program included in the node 200.

For example, these programs are provided through distribution of a storage medium 28, download from the network, or the like. In addition, as the storage medium 28 in which these programs are recorded, various types of storage media may be used such as a storage medium in which information is optically, electrically, or magnetically recorded such as a CD-ROM, a flexible disk, or a magneto-optical disk, and a semiconductor memory in which information is electrically recorded such as a ROM or a flash memory.

In addition, when the storage medium 28 in which the component registration smart contract 221 and the consideration distribution smart contract 222 are recorded is set in the drive device 23, the component registration smart contract 221 and the consideration distribution smart contract 222 are installed in the auxiliary storage device 24 from the storage medium 28 via the drive device 23. The component registration smart contract 221 and the consideration distribution smart contract 222 downloaded from the network are installed in the auxiliary storage device 24 via the interface device 27.

The auxiliary storage device 24 stores the installed program, and stores desirable files, data, and the like. When the node 200 is activated, the memory device 25 reads various programs from the auxiliary storage device 24 and stores the programs. Then, according to the program stored in the memory device 25, the arithmetic processing device 26 implements various types of processing to be described later.

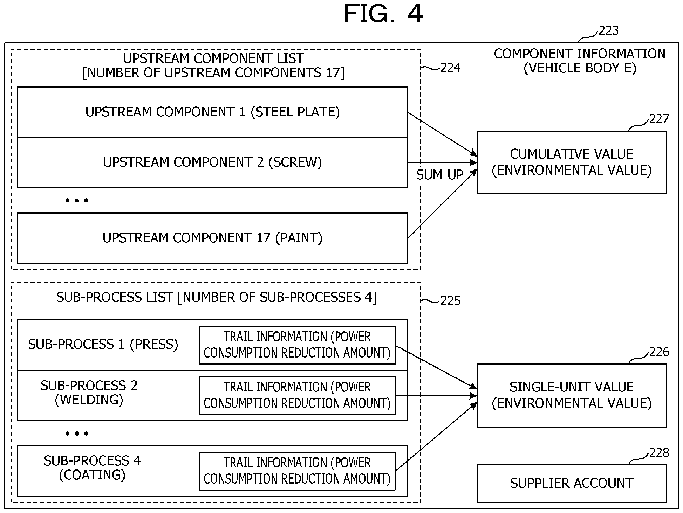

Next, with reference to FIG. 4, the component information 223 according to the present embodiment will be described. FIG. 4 is a diagram illustrating an example of component information.

The component information 223 illustrated in FIG. 4 is generated by the component registration smart contract 221 and stored over the blockchain 220.

The component information 223 includes an upstream component list 224, a sub-process list 225, a single-unit value 226, a cumulative value 227, and a supplier account 228.

The upstream component list 224 and the sub-process list 225 are examples of the component specification information for specifying a component corresponding to the component information 223, and are input by the supplier.

The upstream component list 224 is a list of upstream components immediately upstream of the component corresponding to the component information 223, and is an example of identification information for specifying upstream components.

In other words, the upstream components immediately upstream of the component corresponding to the component information 223 are an example of manufacturing processes performed immediately before the manufacturing process of the component corresponding to the component information 223.

In the upstream component list 224, the identification information for specifying the upstream components may be, for example, a component name, a component ID (component identification information), or the like of the upstream components.

In the example in FIG. 4, it may be seen that the upstream component list 224 includes an upstream component 1 (steel plate), an upstream component 2 (screw), and the like as the upstream components immediately upstream of the component corresponding to the component information 223.

The sub-process list 225 indicates a list of processes for manufacturing the component corresponding to the component information 223. In addition, the sub-process list 225 according to the present embodiment includes information for specifying each process and trail information for each process.

The information specifying each process may be a name of the process or a process ID (process identification information). In addition, the trail information is a trail of manufacturing of a component, and in the example of FIG. 4, a power consumption reduction amount for each manufacturing process of a component is used as the trail information. The power consumption reduction amount indicates an amount of power reduced, by comparing power consumption when a component was manufactured last time with power consumption when the same component was manufactured this time.

Note that the trail information is not limited to the power consumption. The trail information may be different for each component, and may be, for example, various values measured in each process.

The single-unit value 226 indicates a value of a single unit of the component corresponding to the component information 223. The single-unit value 226 is a value determined in the manufacturing process of the component corresponding to the component information 223.

Here, a value of a component in the present embodiment will be described. In the present embodiment, the value of a component is an example of an environmental value generated in a manufacturing process of the component. For example, the environmental value may be an index indicating a degree of contribution to environmental maintenance or reduction in an environmental load.

In addition, in the present embodiment, as for the value used as the trail information, the environmental value increases as this value increases.

In the example in FIG. 4, the power consumption reduction amount is used as the trail information. When the power consumption reduction amount increases, the load on the environment is reduced, and thus it may be said that the environmental value increases.

Note that while the value of the component is the environmental value in the present embodiment, it is not limited to this. For example, information indicating performance, durability, or the like of the component may be used as the trail information, and the performance, durability, or the like of the component may be used as the value of the component.

The cumulative value 227 is a value obtained by summing up single-unit values for respective components from the component corresponding to the component information 223 to the most upstream component in the supply chain. The cumulative value 227 is calculated by summing up a cumulative value of the upstream components included in the component information of the upstream components specified by the upstream component list 224 and the single-unit value 226 of this component.

The supplier account 228 is information indicating an address in which information indicating a consideration to be distributed to a supplier is written.

In the present embodiment, when the component specification information is input from the supplier, the component information 223 is generated by the component registration smart contract 221. Consequently, in the present embodiment, regardless of which supplier registers the component information 223, the component information 223 is generated by the same processing. In other words, in the present embodiment, regardless of which supplier registers the component information 223, the component information 223 having the same data structure is generated and recorded in the blockchain 220.

Consequently, in the present embodiment, even when the scale of the supply chain increases, it is possible to suppress complication of the processing of the smart contract.

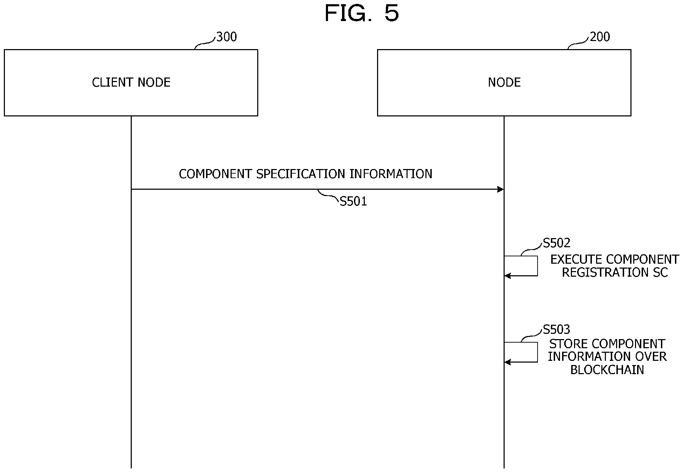

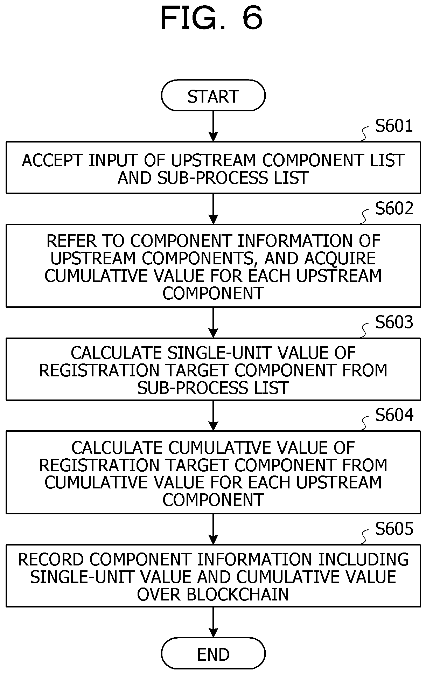

Next, with reference to FIGs. 5 and 6, registration of the component information in the consideration distribution system 100 according to the present embodiment will be described.

FIG. 5 is a first sequence diagram for describing an operation of the consideration distribution system. In the consideration distribution system 100 according to the present embodiment, when the client node 300 accepts input of component specification information from a supplier, the client node 300 transmits this component specification information to the node 200 (step S501).

When the input of the component specification information is accepted from the client node 300, the node 200 executes the component registration smart contract 221 by the smart contract management unit 210 (step S502).

The component registration smart contract 221 generates component information of a component for which the component specification information has been input, and stores the component information in the blockchain 220 (step S503).

With reference to FIG. 6, processing of the component registration smart contract 221 according to the present embodiment will be described below.

FIG. 6 is a flowchart illustrating the processing of the component registration smart contract. FIG. 6 illustrates details of the processing in step S503 in FIG. 5.

The component registration smart contract 221 according to the present embodiment accepts inputs of the upstream component list 224 and the sub-process list 225, which are the component specification information (step S601). Subsequently, the component registration smart contract 221 refers to the component information 223 of immediately upstream components, among the upstream components specified from the upstream component list 224, stored in the blockchain 220, and acquires the cumulative value 227 included in the referred component information 223 (step S602).

Subsequently, by using trail information included in the sub-process list 225, the component registration smart contract 221 calculates the single-unit value 226 of a registration target component for which the component information is to be registered (step S603). Specifically, the component registration smart contract 221 calculates an environmental value generated for the component based on power consumption when the component was manufactured last time and power consumption when the same component was manufactured this time, and sets the environmental value as a single-unit value.

Subsequently, by using the cumulative value 227 of the upstream components acquired in step S602, the component registration smart contract 221 calculates the cumulative value 227 of the registration target component for which the component information is to be registered (step S604).

Specifically, by summing up the single-unit value 226 of the registration target component calculated from the trail information included in the sub-process list 225 and the cumulative value 227 of the upstream components acquired in step S602, the component registration smart contract 221 calculates the cumulative value 227 of the registration target component.

Subsequently, the component registration smart contract 221 records the component information including the upstream component list 224, the sub-process list 225, the single-unit value 226, and the cumulative value 227 over the blockchain 220 (step S605), and ends the processing.

As described above, the component information 223 according to the present embodiment includes the cumulative value 227 obtained by accumulating the single-unit values 226 of the respective components from the most upstream component in the supply chain to the registration target component in the component information 223. Consequently, in the present embodiment, when the component information 223 is generated, the cumulative value of the registration target component may be calculated only by referring to the component information 223 of the immediately upstream components.

Note that the cumulative value 227 may not be included in the component information 223. In this case, the component registration smart contract 221 may calculate the cumulative value 227 of the registration target component by repeating the processing of acquiring the single-unit value 226 of a single immediately upstream component from the component information 223 of the immediately upstream components of the registration target component up to the most upstream component and summing up all the acquired single-unit values 226 and the single-unit value of the registration target component.

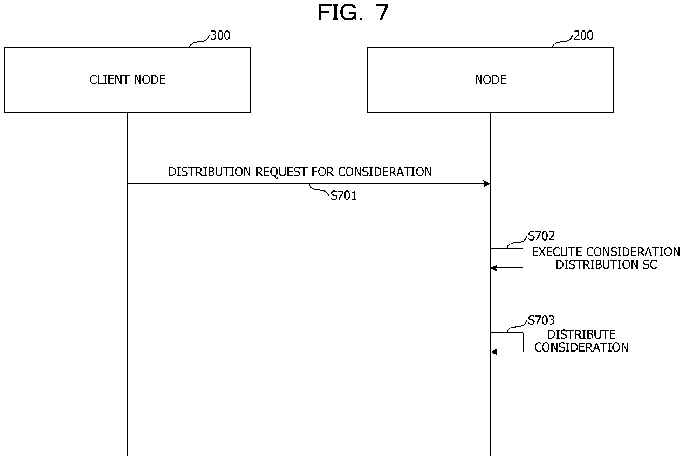

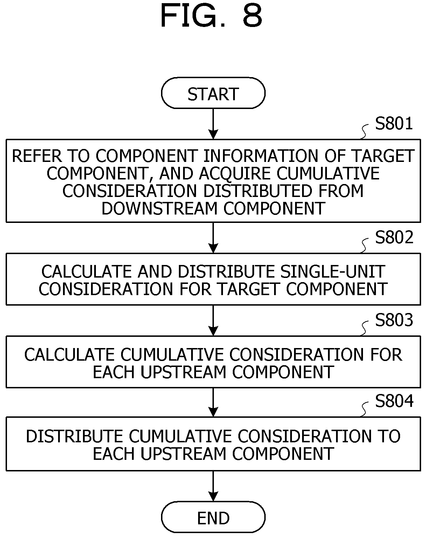

Next, with reference to FIGs. 7 and 8, consideration distribution in the consideration distribution system 100 according to the present embodiment will be described.

FIG. 7 is a second sequence diagram for describing the operation of the consideration distribution system. In the consideration distribution system 100 of the present embodiment, when the client node 300 receives a distribution request for a consideration from a supplier, the client node 300 transmits this distribution request to the node 200 (step S701).

Note that by the operation of the client node 300 by the supplier, the client node 300 may accept the distribution request. In addition, the client node 300 may transmit the distribution request to the node 200 at regular intervals.

When the node 200 accepts the distribution request from the client node 300, the node 200 executes the consideration distribution smart contract 222 by the smart contract management unit 210 (step S702).

The consideration distribution smart contract 222 calculates a consideration to be distributed for the component for which the distribution request has been made, and distributes the consideration to the supplier (step S703).

Note that the node 200 may output a notification indicating that the consideration has been distributed, to the client node 300 that has made the distribution request.

With reference to FIG. 8, processing of the consideration distribution smart contract 222 according to the present embodiment will be described below.

FIG. 8 is a flowchart illustrating the processing of the consideration distribution smart contract. FIG. 8 illustrates details of the processing in step S703 in FIG. 7.

By referring to the component information 223 corresponding to a distribution target component for which a consideration is to be distributed, the consideration distribution smart contract 222 acquires a cumulative consideration distributed when a consideration for a downstream component immediately downstream is calculated (step S801).

Subsequently, by using the single-unit value 226 and the cumulative value 227 included in the component information 223, the consideration distribution smart contract 222 calculates a single-unit consideration for the distribution target component, and distributes a consideration to the supplier of the component (step S802).

The single-unit consideration for the distribution target component according to the present embodiment is calculated by Expression (1) below.

$$\text{Single-unit consideration for distribution target component} = \text{cumulative}$$

$$\text{consideration for distribution target component} \times$$

$$\text{single-unit value of distribution target component/cumulative value of}$$

$$\text{distribution target component ... Expression (1)}$$

...

Note that distributing the consideration to the supplier indicates, for example, recording information indicating the consideration at the address indicated by the supplier account 228 included in the component information 223.

Subsequently, by referring to the component information 223 of the immediately upstream components of the distribution target component, the consideration distribution smart contract 222 calculates a cumulative consideration for each of the immediately upstream components (step S803).

Specifically, the consideration distribution smart contract 222 refers to the component information 223 of the upstream components specified from the upstream component list 224 included in the component information 223 of the distribution target component, and acquires the cumulative value 227 of the upstream components included in the component information 223 of the upstream components. Then, by using Expression (2) below, the consideration distribution smart contract 222 calculates the cumulative consideration for each of the immediately upstream components.

$$\text{Cumulative consideration for upstream components} = \text{cumulative}$$

$$\text{consideration for distribution target component} \times$$

$$\text{cumulative value of upstream components/cumulative value of distribution}$$

$$\text{target component} \dots \text{Expression (2)}$$

= cumulative

Subsequently, the consideration distribution smart contract 222 distributes the cumulative consideration to each of the upstream components specified from the upstream component list 224 (step S804), and ends the processing.

By distributing the consideration in this manner in the present embodiment, the consideration may be appropriately distributed for each process included in the supply chain.

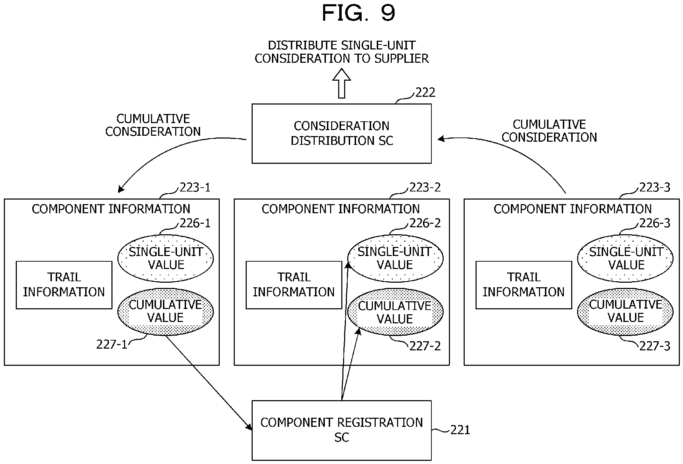

With reference to FIG. 9, the distribution of the consideration in the present embodiment will be further described below. FIG. 9 is a first diagram for describing the distribution of the consideration.

Component information 223-1 illustrated in FIG. 9 is component information 223 of an immediately upstream component of component information 223-2, and component information 223-2 is component information 223 of an immediately upstream component of component information 223-3.

In other words, the component information 223-2 is the component information 223 of a downstream component immediately downstream of the component information 223-1, and the component information 223-3 is the component information 223 of a downstream component immediately downstream of the component information 223-2.

When each piece of the component information 223 is recorded in the blockchain 220 as described above, a case where distribution of consideration for a component corresponding to the component information 223-2 is requested will be described.

Here, a single-unit value 226-2 and a cumulative value 227-2 of the component referred to when the consideration is calculated are calculated by the component registration smart contract 221 when the component information 223-2 is generated.

Furthermore, the cumulative consideration referred to when the consideration distribution smart contract 222 calculates a single-unit consideration for the component corresponding to the component information 223-2 is calculated when the consideration is distributed to the downstream component.

That is, the single-unit value 226-2 and the cumulative value 227-2 referred to when the consideration distribution smart contract 222 calculates the single-unit consideration for the component corresponding to the component information 223-2 are calculated in advance by the component registration smart contract 221. In addition, the cumulative consideration referred to when the consideration distribution smart contract 222 calculates the single-unit consideration for the component corresponding to the component information 223-2 is calculated when the single-unit consideration of the component corresponding to the component information 223-3 is calculated.

In other words, all the values referred to when the consideration distribution smart contract 222 calculates the single-unit consideration for the component corresponding to the component information 223-2 are values already calculated at different timings. Consequently, in the present embodiment, it is difficult to perform impropriety in the procedure of calculating the single-unit consideration for the component corresponding to the component information 223-2.

Consequently, according to the present embodiment, even when the scale of the supply chain increases, it is possible to suppress inappropriate distribution of a consideration for each process and appropriately distribute a consideration to each process.

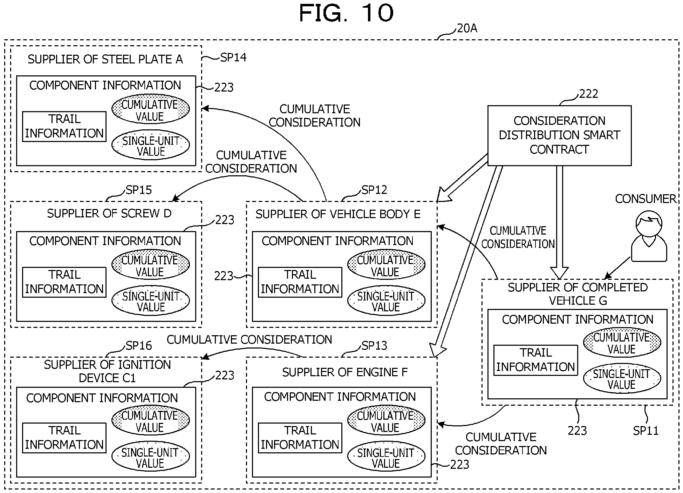

With reference to FIG. 10, distribution of a consideration of a supplier in a supply chain to which the present embodiment is applied will be described below. FIG. 10 is a second diagram for describing the distribution of the consideration.

In the example of FIG. 10, a case where a consideration is returned from a consumer for a completed vehicle G that is a completed form of a product manufactured in a supply chain 20A is illustrated.

In this case, when a distribution request for a consideration for the completed vehicle G is input to the client node 300 corresponding to a supplier SP11 of the completed vehicle G, this distribution request is transmitted to the node 200, and the consideration distribution smart contract 222 is executed.

By referring to component information 223 of the completed vehicle G recorded over the blockchain 220, the consideration distribution smart contract 222 calculates a single-unit consideration for the completed vehicle G by using the consideration returned from the consumer as a cumulative consideration, and distributes the single-unit consideration to the supplier SP11. In addition, the consideration distribution smart contract 222 calculates a cumulative consideration for a vehicle body E, which is an immediately upstream component of the completed vehicle G, and a cumulative consideration for an engine F, which is an immediately upstream component of the completed vehicle G. Then, the consideration distribution smart contract 222 distributes the cumulative consideration to each of a supplier SP12 of the vehicle body E and a supplier SP13 of the engine F.

In the present embodiment, similar processing is performed when a distribution request for a consideration is input to the corresponding client node 300 in each of the supplier SP12 and the supplier SP13.

That is, the node 200 executes the consideration distribution smart contract 222. From component information 223 of the vehicle body E recorded over the blockchain 220 and the cumulative consideration distributed from the downstream side, the consideration distribution smart contract 222 calculates a single-unit consideration for the vehicle body E and distributes the single-unit consideration to the supplier SP12. In addition, the consideration distribution smart contract 222 calculates a cumulative consideration for a steel plate A, which is an immediately upstream component of the vehicle body E, and a cumulative consideration for a screw D, which is an immediately upstream component of the vehicle body E. Then, the consideration distribution smart contract 222 distributes the cumulative consideration to each of a supplier SP14 of the steel plate A and a supplier SP15 of the screw D.

In addition, when a distribution request for a consideration is input to the client node 300 corresponding to the supplier SP13, the node 200 executes the consideration distribution smart contract 222.

From component information 223 of the engine F recorded over the blockchain 220 and the cumulative consideration distributed from the downstream side, the consideration distribution smart contract 222 calculates a single-unit consideration for the engine F and distributes the single-unit consideration to the supplier SP13. In addition, the consideration distribution smart contract 222 calculates a cumulative consideration for an ignition device C, which is an immediately upstream component of the engine F. Then, the consideration distribution smart contract 222 distributes the cumulative consideration to a supplier SP16 of the ignition device C.

As described above, in the present embodiment, when, for example, a consideration is returned from a consumer in the supply chain 20A, the consideration may be appropriately distributed to each supplier up to a most upstream supplier by, for example, requesting distribution of the consideration in order from a most downstream supplier. Consequently, according to the present embodiment, the consideration may be appropriately distributed to the entire supply chain without assuming a "trusted third party (TTP)" for managing the component registration smart contract 221 and the consideration distribution smart contract 222.

In addition, according to the present embodiment, since the consideration distribution smart contract 222 is easily verified even when the scale of the supply chain increases, the reliability of the processing is easily maintained, and inappropriate distribution of a consideration is easily detected. Consequently, according to the present embodiment, inappropriate distribution of the consideration may be suppressed.

The present invention is not limited to the specifically disclosed embodiment, and various modifications and changes may be made without departing from the scope of the appended claims.

**Claims**

1. A consideration distribution program causing a computer to execute processing comprising:

   for each process included in a supply chain, recording process information that includes a value of the process and identification information for specifying a process performed immediately before the process over a blockchain; and
   referring to the process information and process information of the process performed immediately before specified from the identification information, and distributing a consideration to the process and the process performed immediately before.

2. The consideration distribution program according to claim 1, wherein
   a consideration for the process is calculated based on the value of the process included in the process information of the process and a value of the process performed immediately before included in the process information of the process performed immediately before.

3. The consideration distribution program according to claim 1, wherein

   the process information includes a cumulative value obtained by summing up values of respective processes from a most upstream process to the process in the supply chain, and

a consideration for the process is calculated based on the value of the process included in the process information of the process and a cumulative value up to the process performed immediately before that is included in the process information of the process performed immediately before.

4. The consideration distribution program according to claim 1, further causing the computer to execute processing comprising:

accepting input of the identification information for specifying the process performed immediately before and trail information used for calculation of the value of the process;

calculating the value of the process, and a cumulative value obtained by summing up values of respective processes from a most upstream process to the process in the supply chain; and

generating process information that includes the value of the process and the cumulative value.

5. A consideration distribution method implemented by a computer to execute processing comprising:

for each process included in a supply chain, recording process information that includes a value of the process and identification information for specifying a process performed immediately before the process over a blockchain; and

referring to the process information and process information of the process performed immediately before specified from the identification information, and distributing a consideration to the process and the process performed immediately before.

6. A consideration distribution apparatus comprising:

a recording unit configured to, for each process included in a supply chain, record process information that includes a value of the process and identification information for specifying a process performed immediately before the process over a blockchain; and

a consideration distributing unit configured to refer to the process information and process information of the process performed immediately before specified from the identification information, and distribute a consideration to the process and the process performed immediately before.

# FIG. 1

FIG. 2

## FIG. 3

200

- MEMORY DEVICE 25
- ARITHMETIC PROCESSING DEVICE 26
- INTERFACE DEVICE 27
- B
- INPUT DEVICE 21
- OUTPUT DEVICE 22
- DRIVE DEVICE 23
- AUXILIARY STORAGE DEVICE 24
- RECORDING MEDIUM 28

# FIG. 4

## FIG. 5

CLIENT NODE — 300

NODE — 200

COMPONENT SPECIFICATION INFORMATION

S501

S502 EXECUTE COMPONENT REGISTRATION SC

S503 STORE COMPONENT INFORMATION OVER BLOCKCHAIN

# FIG. 6

START

S601

ACCEPT INPUT OF UPSTREAM COMPONENT LIST
AND SUB-PROCESS LIST

S602

REFER TO COMPONENT INFORMATION OF
UPSTREAM COMPONENTS, AND ACQUIRE
CUMULATIVE VALUE FOR EACH UPSTREAM
COMPONENT

S603

CALCULATE SINGLE-UNIT VALUE OF
REGISTRATION TARGET COMPONENT FROM
SUB-PROCESS LIST

S604

CALCULATE CUMULATIVE VALUE OF
REGISTRATION TARGET COMPONENT FROM
CUMULATIVE VALUE FOR EACH UPSTREAM
COMPONENT

S605

RECORD COMPONENT INFORMATION INCLUDING
SINGLE-UNIT VALUE AND CUMULATIVE VALUE
OVER BLOCKCHAIN

END

# FIG. 7

# FIG. 8

```
            ┌──────────────┐
            │    START     │
            └──────────────┘
                   │
                   ▼                              ⌐ S801
┌────────────────────────────────────────────────┐
│ REFER TO COMPONENT INFORMATION OF TARGET         │
│ COMPONENT, AND ACQUIRE CUMULATIVE                │
│ CONSIDERATION DISTRIBUTED FROM                   │
│ DOWNSTREAM COMPONENT                             │
└────────────────────────────────────────────────┘
                   │
                   ▼                              ⌐ S802
┌────────────────────────────────────────────────┐
│ CALCULATE AND DISTRIBUTE SINGLE-UNIT             │
│ CONSIDERATION FOR TARGET COMPONENT               │
└────────────────────────────────────────────────┘
                   │
                   ▼                              ⌐ S803
┌────────────────────────────────────────────────┐
│ CALCULATE CUMULATIVE CONSIDERATION FOR           │
│ EACH UPSTREAM COMPONENT                          │
└────────────────────────────────────────────────┘
                   │
                   ▼                              ⌐ S804
┌────────────────────────────────────────────────┐
│ DISTRIBUTE CUMULATIVE CONSIDERATION TO           │
│ EACH UPSTREAM COMPONENT                          │
└────────────────────────────────────────────────┘
                   │
                   ▼
            ┌──────────────┐
            │     END      │
            └──────────────┘
```

# FIG. 9

# FIG. 10

| INTERNATIONAL SEARCH REPORT | International application No. |
| --- | --- |
| | **PCT/JP2022/024716** |

**A.    CLASSIFICATION OF SUBJECT MATTER**

*G06Q 40/00*(2012.01)i; *G06Q 50/04*(2012.01)i
FI:    G06Q50/04; G06Q40/00 400

According to International Patent Classification (IPC) or to both national classification and IPC

**B.    FIELDS SEARCHED**

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2019-49930 A (HITACHI LTD) 28 March 2019 (2019-03-28)<br>paragraphs [0015]-[0018], [0036]-[0038], [0046]-[0047], [0049], [0053]-[0054], [0056], [0060], [0066], [0069], [0072]-[0137], [0141], [0143]-[0145], fig. 1, 3-14 | 1-6 |
| A | JP 2014-10639 A (JFE SYSTEMS INC) 20 January 2014 (2014-01-20)<br>entire text, all drawings | 1-6 |
| A | 森川 夢佑斗, 未来ＩＴ図解 これからのブロックチェーンビジネス, 初版, 株式会社エムディエヌコーポレーション 山口 康夫, 01 November 2018, pp. 090-093, ISBN978-4-8443-6822-9<br>entire text, all drawings, non-official translation (MORIKAWA, Muuto. Illustrate the future of IT: Future blockchain business. 1st edition. MDN CORPORATION. YAMAGUCHI, Yasuo.) | 1-6 |
| A | 奥平 力, 仮想通貨だけじゃないブロックチェーン　企業のESG活動にお墨付き, 日経ビジネス, 24 May 2019 (accession date), 27 March 2019, no. 1992, pp. 70-72<br>entire text, all drawings, (Nikkei Business), non-official translation (OKUDAIRA, Tsutomu. Blockchain, not just virtual currency: Approval to corporate ESG activities.) | 1-6 |

☑ Further documents are listed in the continuation of Box C.     ☑ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **27 July 2022** | **09 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 546 243 A1

**INTERNATIONAL SEARCH REPORT**

International application No.

**PCT/JP2022/024716**

**C. DOCUMENTS CONSIDERED TO BE RELEVANT**

| Category* | Citation of document, with indication, where appropriate, of the relevant passages | Relevant to claim No. |
|---|---|---|
| A | WO 2021/125107 A1 (PANASONIC INTELLECTUAL PROPERTY CORPORATION OF AMERICA) 24 June 2021 (2021-06-24)<br>entire text, all drawings | 1-6 |
| A | US 6988083 B2 (CARGILL, INC.) 17 January 2006 (2006-01-17)<br>entire text, all drawings | 1-6 |
| A | 中野幹久, サプライチェーン・マネジメント研究における「価値」：文献レビュー, 京都マネジメント・レビュー, 38巻, 京都産業大学マネジメント研究会, 31 March 2021, pp. 123-142, [retrieved on 27 July 2022], Internet<URL: https://ksu.repo.nii.ac.jp/?action=pages_view_main&active_action=repository_view_main_item_detail&item_id=10638&item_no=1&page_id=13&block_id=21><br>entire text, all drawings, (NAKANO, Mikihisa. "Value" in supply chain management research: A literature review.), non-official translation (Kyoto management review. vol. 38. Management research group of KYOTO SANGYO UNIVERSITY.) | 1-6 |

Form PCT/ISA/210 (second sheet) (January 2015)

INTERNATIONAL SEARCH REPORT

Information on patent family members

International application No.

**PCT/JP2022/024716**

| Patent document cited in search report | | | Publication date (day/month/year) | Patent family member(s) | Publication date (day/month/year) |
|---|---|---|---|---|---|
| JP | 2019-49930 | A | 28 March 2019 | US 2019/0080422 A1 paragraphs [0028]-[0031], [0049]-[0051], [0058]-[0063], [0067]-[0070], [0074], [0080], [0083], [0086]-[0151], [0141]-[0161], fig. 1, 3-14<br>EP 3454287 A1<br>SG 10201801857V A | |
| JP | 2014-10639 | A | 20 January 2014 | (Family: none) | |
| WO | 2021/125107 | A1 | 24 June 2021 | (Family: none) | |
| US | 6988083 | B2 | 17 January 2006 | (Family: none) | |

Form PCT/ISA/210 (patent family annex) (January 2015)

**REFERENCES CITED IN THE DESCRIPTION**

**Patent documents cited in the description**

- JP 2019074910 A